# EUROPEAN PATENT APPLICATION

(11) **EP 4 672 022 A1**
(43) Date of publication of application: **31.12.2025**
(21) Application number: 25174481.9
(22) Date of filing: 06.05.2025
(51) Int. Cl.: G06F 16/27, G06F 16/28, G06F 16/901

(54) **METHODS AND APPARATUSES FOR IMPORTING GRAPH DATA ONLINE AND GRAPH DATABASE SYSTEMS**

(30) Priority: 26.06.2024 CN 202410840341
(71) Applicant: Alipay (Hangzhou) Information Technology Co., Ltd., Hangzhou, Zhejiang 310000 (CN)
(72) Inventor: LI, Panpan, Hangzhou, Zhejiang, 310000 (CN); WANG, Zhiyong, Hangzhou, Zhejiang, 310000 (CN); LIN, Heng, Hangzhou, Zhejiang, 310000 (CN)
(74) Representative: Fish & Richardson P.C.

(57) **Abstract**

Embodiments of this specification provide methods and apparatuses for importing graph data online and graph database systems. In the methods for importing graph data online, graph data stored in a first storage format are acquired from a data source; external sorting is performed on the graph data to obtain sorted graph data; the sorted graph data are packaged based on a second storage format specified in a target graph database, to obtain a graph data file to be imported and a corresponding metadata file; and storage location information of the graph data file to be imported and the corresponding metadata file is provided to a graph database server, so that the graph database server imports the graph data file to the target graph database, and updates a metadata file corresponding to the target graph database based on the obtained metadata file.

## Description

### TECHNICAL FIELD

Embodiments of this specification generally relate to the field of computer technologies, and in particular, to methods and apparatuses for importing graph data online and graph database systems.

### BACKGROUND

A graph database is a data management system that uses points and edges as basic storage units and uses efficient storage and queries of graph data as design principles. As a non-relational database (NoSQL), the graph database is well suited for scenarios where complex relationships and connectivity data need to be processed and analyzed, for example, social network analysis, a knowledge graph, a recommendation system, and financial risk management. In the above-mentioned scenarios, very complex queries usually need to be processed. To improve efficiency, the graph database usually stores data in an ordered storage engine. Therefore, how to maintain the ordering of an original data structure while ensuring import performance during data import is a problem that needs to be solved.

### SUMMERY

In view of the above-mentioned descriptions, embodiments of this specification provide methods and apparatuses for importing graph data online and graph database systems. In the methods for importing graph data online, graph data stored in a first storage format are acquired from a data source; external sorting is performed on the graph data to obtain sorted graph data; the sorted graph data are packaged based on a second storage format specified in a target graph database, to obtain a graph data file to be imported and a corresponding metadata file; and storage location information of the graph data file to be imported and the corresponding metadata file is provided to a graph database server, so that the graph database server imports the graph data file to the target graph database, and updates a metadata file corresponding to the target graph database based on the obtained metadata file. As such, during data import, the ordering of an original data structure is maintained, and good import performance is ensured. In addition, graph data can be imported online with high performance.

According to an aspect of the embodiments of this specification, a method for importing graph data online is provided, including: acquiring graph data stored in a first storage format from a data source; performing external sorting on the graph data to obtain sorted graph data; packaging the sorted graph data based on a second storage format specified in a target graph database, to obtain a graph data file to be imported and a corresponding metadata file; and providing storage location information of the graph data file to be imported and the corresponding metadata file to a graph database server, so that the graph database server imports the graph data file to the target graph database, and updates a metadata file corresponding to the target graph database based on the obtained metadata file.

According to another aspect of the embodiments of this specification, an apparatus for importing graph data online is provided, including: a data acquisition unit, configured to acquire graph data stored in a first storage format from a data source; an external sorting unit, configured to perform external sorting on the graph data to obtain sorted graph data; an adaptation processing unit, configured to package the sorted graph data based on a second storage format specified in a target graph database, to obtain a graph data file to be imported and a corresponding metadata file; and a storage location providing unit, configured to provide storage location information of the graph data file to be imported and the corresponding metadata file to a graph database server, so that the graph database server imports the graph data file to the target graph database, and updates a metadata file corresponding to the target graph database based on the obtained metadata file.

According to still another aspect of the embodiments of this specification, a graph database system is provided, including a graph database server, configured to send a data import instruction to a data source server in response to receiving a graph data import request, where the graph data import request includes data source information, and the data source information includes storage location information corresponding to target graph data; and the data source server, configured to store, in a first storage format, graph data that needs to be imported; acquire the target graph data targeted by the data import instruction in response to receiving the data import instruction; perform external sorting on the target graph data to obtain sorted target graph data; package the sorted target graph data based on a second storage format specified in a target graph database, to obtain a graph data file to be imported and a corresponding metadata file; and provide storage location information of the graph data file to be imported and the corresponding metadata file to the graph database server, so that the graph database server imports the graph data file to the target graph database, and updates a metadata file corresponding to the target graph database based on the obtained metadata file.

According to another aspect of the embodiments of this specification, an apparatus for importing graph data online is provided, including at least one processor, a storage coupled to the at least one processor, and a computer program stored in the storage. The at least one processor executes the computer program to implement the above-mentioned method for importing graph data online.

According to another aspect of the embodiments of this specification, a computer-readable storage medium is provided. The computer-readable storage medium stores a computer program, and the above-mentioned method for importing graph data online is implemented when the computer program is executed by a processor.

According to another aspect of the embodiments of this specification, a computer program product is provided. The computer program product includes a computer program, and the above-mentioned method for importing graph data online is implemented when the computer program is executed by a processor.

### BRIEF DESCRIPTION OF DRAWINGS

The essence and advantages of the content of this specification can be further understood by referring to the following accompanying drawings. In the accompanying drawings, similar components or features can have the same reference numerals.
FIG. 1 illustrates an explanatory architecture for a method and an apparatus for importing graph data online and a graph database system, according to some embodiments of this specification;
FIG. 2 is a flowchart illustrating an example of a method for importing graph data online, according to some embodiments of this specification;
FIG. 3 is a schematic diagram illustrating an example of a process of performing external sorting on graph data, according to some embodiments of this specification;
FIG. 4 is a flowchart illustrating an example of anode data subfile and edge data subfile generation process, according to some embodiments of this specification;
FIG. 5 is a flowchart illustrating an example of a process of performing multiway merging on node data and edge data, according to some embodiments of this specification;
FIG. 6 is a block diagram illustrating an example of an apparatus for importing graph data online, according to some embodiments of this specification;
FIG. 7 is a block diagram illustrating an example of an external sorting unit in an apparatus for importing graph data online, according to some embodiments of this specification;
FIG. 8 is a block diagram illustrating an example of a graph database system, according to some embodiments of this specification; and
FIG. 9 is a schematic diagram illustrating an example of an apparatus for importing graph data online, according to some embodiments of this specification.

### DESCRIPTION OF EMBODIMENTS

The subject matter described in this specification will be discussed below with reference to example implementations. It should be understood that the discussion of these implementations is merely intended to enable a person skilled in the art to better understand the subject matter described in this specification, and is not intended to limit the protection scope, applicability, or examples described in the claims. The functions and arrangements of the elements under discussion can be changed without departing from the protection scope of the embodiment content of this specification. Various processes or components can be omitted, replaced, or added in the examples as needed. In addition, features described for some examples can also be combined in other examples.

As used in this specification, the term "include" and a variant thereof represent open terms, meaning "including but not limited to". The term "based on" represents "at least partially based on". The terms "one embodiment" and "an embodiment" represent "at least one embodiment". The term "another embodiment" represents "at least one other embodiment". The terms "first", "second", etc. can refer to different or identical objects. Other definitions, whether explicit or implicit, can be included below. Unless expressly specified in the context, the definition of a term is consistent throughout this specification.

In this specification, the term "ordered storage engine" can be a storage engine that organizes data into an ordered structure for quick retrieval. Because a graph database needs to process queries of a large quantity of complex relationships, an ordered structure is often used to store data. The ordered storage engine can include but is not limited to at least one of the following: a B-tree, an LSM tree, or an index heap.

In this specification, the term "schema" is used to define and describe the structure and constraints of a data model. In some examples, the schema can be used to indicate that the attribute value of the first attribute in a binary string representing node data is int and the attribute value of the second attribute is float.

In this specification, the term "external sorting" refers to a sorting algorithm used to process large-scale data, and is usually applicable to a case that a large data amount cannot be loaded to a memory at a time for sorting.

In this specification, the term "metadata" is data describing, defining, and managing data. In some examples, the metadata can be data describing, defining, and managing complete graph data. In some examples, the graph database can support a multi-graph model, that is, in each graph database instance, a plurality of subgraphs can be included, and the subgraphs are logically isolated (that is, each subgraph has independent nodes and edges) and physically isolated from each other. Therefore, the metadata can be data describing, defining, and managing data of one subgraph. It can be understood that for a graph database including a plurality of subgraphs, metadata corresponding to the entire graph database can be included in addition to metadata corresponding to each subgraph.

In recent years, with the development and innovation of graph database technologies, the application of the graph database is becoming more widespread, for example, social network analysis, a knowledge graph, a recommendation system, and financial risk management. During data import to the graph database, the following method is usually used: Data are first divided, and data blocks obtained through division are sequentially uploaded to a graph database server. However, such a method of dividing data into blocks and sequentially inserting the blocks into an orderly stored graph database results in relatively large network bandwidth load and occupation of a large quantity of server resources during import, causing poor data import performance of the graph database. Therefore, how to maintain the ordering of an original data structure while ensuring import performance during data import is a problem that needs to be solved.

In view of this, the embodiments of this specification provide methods and apparatuses for importing graph data online and graph database systems. In the methods for importing graph data online, graph data to be imported and a corresponding schema are acquired based on data source information and a target subgraph identifier that are included in a received graph data import request; external sorting is performed on the graph data to be imported based on the graph data to be imported and the corresponding schema, to obtain sorted graph data; then adaptation processing is performed on the sorted graph data based on a storage format, in a graph database, of a target subgraph indicated by the target subgraph identifier, to obtain an underlying database file matching the storage format and a corresponding metadata file; and the underlying database file is imported to the target subgraph, and a metadata file corresponding to the target subgraph is updated based on the obtained metadata file. As such, during data import, the ordering of an original data structure is maintained, and good import performance is ensured. In addition, graph data can be imported online with high performance.

With reference to the accompanying drawings, the following describes in detail the methods and the apparatuses for importing graph data online and the graph database systems according to the embodiments of this specification.

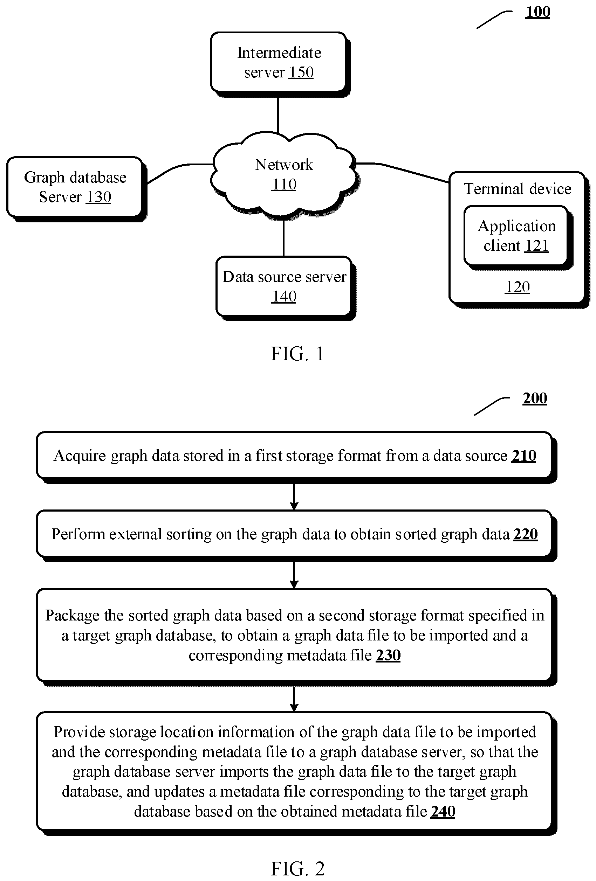

FIG. 1 illustrates an explanatory architecture 100 for a method and an apparatus for importing graph data online and a graph database system, according to some embodiments of this specification.

In FIG. 1, a network 110 is applied to interconnect a terminal device 120, a graph database server 130, a data source server 140, and an intermediate server 150.

The network 110 can be any type of network that can interconnect network entities. The network 110 can be a single network or a combination of various networks. In terms of coverage, the network 110 can be a local area network (LAN), a wide area network (WAN), etc. In terms of a bearing medium, the network 110 can be a wired network, a wireless network, etc. In terms of data switching technologies, the network 110 can be a circuit switched network, a packet switched network, etc.

The terminal device 120 can be any type of electronic computing device that can connect to the network 110, access a server or website on the network 110, process data or a signal, etc. For example, the terminal device 120 can be a desktop computer, a laptop computer, a tablet computer, a smartphone, etc. Although only one terminal device is shown in FIG. 1, it should be understood that different quantities of terminal devices can be connected to the network 110.

In an implementation, the terminal device 120 can be used by a user. The terminal device 120 can include an application client (such as an application client 121) that provides various services for the user. In some cases, the application client 121 can interact with the graph database server 130. For example, the application client 121 can transmit, to the graph database server 130, a message entered by the user, and receive a response (for example, a message indicating that data import succeeds) associated with the message from the graph database server 130. In this specification, "message" can refer to any input information, for example, used to indicate storage location information and a target subgraph identifier corresponding to graph data to be imported and a corresponding schema.

The data source server 140 can be connected to the terminal device 120, the graph database server 130, and the intermediate server 150 through the network 110. The data source server 140 can store graph data and a corresponding schema in a first storage format. In some implementations, the intermediate server 150 can perform at least some steps of the above-mentioned methods for importing graph data online. In some implementations, the data source server 140 can perform at least some steps of the above-mentioned methods for importing graph data online. In some implementations, the above-mentioned methods for importing graph data online can be performed by a process other than a process in the graph database server 130 that is used to provide an online graph database service. Therefore, the graph data stored in the first storage format can be packaged into graph data file to be imported that is stored in a second storage format, and storage location information of the graph data file to be imported and a corresponding metadata file can be provided to the graph database server 130, to implement online import of graph data on the graph database server 130.

It should be understood that all network entities shown in FIG. 1 are examples. According to a specific application need, the architecture 100 can include any other network entity.

FIG. 2 is a flowchart illustrating a method 200 for importing graph data online, according to some embodiments of this specification.

As shown in FIG. 2, in step 210, graph data stored in a first storage format is acquired from a data source.

In the embodiments, the graph data can be stored in the data source in the first storage format. In some examples, the data source can be the data source server shown by 140 in FIG. 1. In some examples, a client can upload the graph data that needs to be imported, and receive storage location information that is fed back. For example, the data source server can store the uploaded graph data in the first storage format, and the data source server feeds back the storage location information corresponding to the graph data to the client. For another example, the graph data can be uploaded to another server in the same local area network as the graph database server, and the server that receives the graph data feeds back the storage location information corresponding to the graph data to the client. In some examples, the graph data can be divided into a data file and a schema file, and the data file and the schema file can be individually stored. In these examples, the storage location information that is fed back can include storage location information of the data file and storage location information of the schema file.

In some examples, the graph data stored in the first storage format can be acquired in response to receiving a graph data import request. The graph data import request can include data source information. The data source information can include the storage location information corresponding to the graph data that needs to be imported. The storage location information can be used to indicate a resource storage path. In some examples, the storage location information can be represented by a uniform resource identifier (URI).

In some examples, the graph data can include nodes, edges, and attributes respectively corresponding to the nodes and the edges. In some examples, the graph data can further include index data. In some examples, the index data can be created based on attributes. In some examples, the index data can be embodied as a table in the graph data to be imported.

In some examples, a target graph database can include a plurality of subgraphs that are isolated from each other. In these examples, the graph data import request can further include a subgraph identifier of a target subgraph in the target graph database to which the graph data is to be imported.

In step 220, external sorting is performed on the graph data to obtain sorted graph data.

In the embodiments, node data, edge data, and corresponding node attribute data and edge attribute data in the graph data that need to be imported can be read. Then external sorting is performed on the read data to obtain the sorted graph data. In some examples, a corresponding data file can be read based on a schema file, to obtain the node data, the edge data, and the corresponding node attribute data and edge attribute data in the graph data. In some examples, external sorting can be performed by using an ordered storage engine of a graph database, so that the sorted graph data can be obtained.

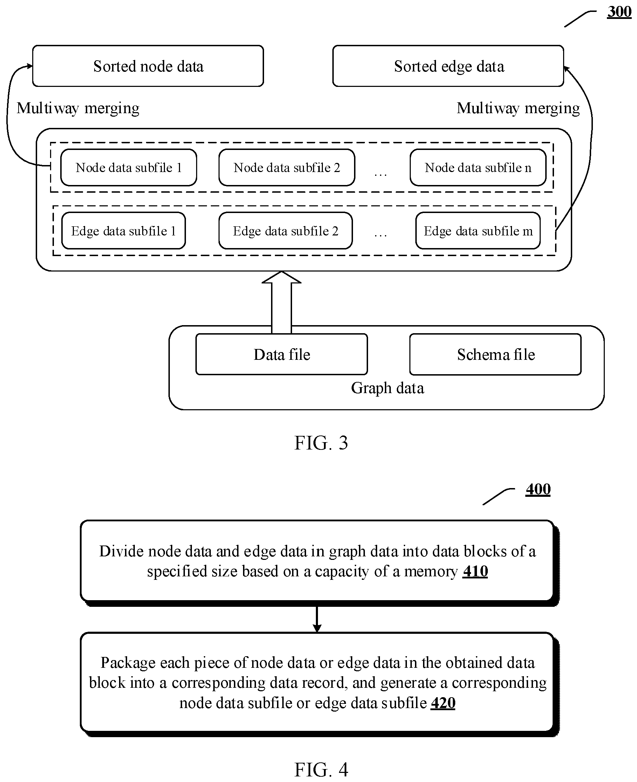

FIG. 3 is a schematic diagram illustrating an example of a process 300 of performing external sorting on graph data, according to some embodiments of this specification.

As shown in FIG. 3, graph data that needs to be imported can be divided into a plurality of node data subfiles (for example, node data subfile 1 to node data subfile n) and a plurality of edge data subfiles (for example, edge data subfile 1 to edge data subfile m) based on a capacity of a memory. In some examples, each node data subfile and each edge data subfile can be embodied as a data block of no more than a specified capacity size. It can be understood that the specified capacity size does not exceed the capacity of the memory.

FIG. 4 is a flowchart illustrating an example of anode data subfile and edge data subfile generation process, according to some embodiments of this specification.

As shown in FIG. 4, in step 410, the node data and the edge data in the graph data are divided into data blocks of a specified size based on the capacity of the memory.

In the embodiments, the graph data can be divided into a plurality of pieces of node data and a plurality of pieces of edge data. Then the plurality of pieces of node data and the plurality of pieces of edge data are individually divided by the specified size to form data blocks. It can be understood that each data block can include several pieces of node data or several pieces of edge data, and a size of each data block is not greater than the capacity of the memory.

In step 420, each piece of node data or edge data in the obtained data block is packaged into a corresponding data record, and a corresponding node data subfile or edge data subfile is generated.

In the embodiments, each piece of node data in each obtained data block and corresponding node attribute data can be packaged into one node data record based on an indication of the schema file, to form a node data subfile corresponding to the node data block. Similarly, each piece of edge data in the data block and corresponding edge attribute data can be packaged into one edge data record, to form an edge data subfile corresponding to the edge data block.

In the above-mentioned method, attribute data and corresponding node data or edge data in the graph data can be packaged into a record, to form a node data subfile and an edge data subfile of a specified size, thereby providing a technology support for subsequent internal sorting.

Referring back to FIG. 3, for each node data subfile, node data records in the node data subfile can be arranged in order in the memory to obtain an internally ordered node data subfile. In some examples, the node data records can be arranged in order based on unique identifiers (for example, VIDs or vertex IDs) of nodes. Similarly, for each edge data subfile, edge data records in the edge data subfile can be arranged in order in the memory to obtain an internally ordered edge data subfile. In some examples, the edge data records can be arranged in order based on unique identifiers of edges. In some examples, each internally sorted node data subfile and edge data subfile can be persisted on a hard disk.

Further, multiway merging can be performed on the obtained internally ordered node data subfiles by using various methods, and node data records in the node data subfile can be sorted to obtain sorted node data. Similarly, multiway merging can be performed on the obtained internally ordered edge data subfiles, and edge data records in the edge data subfile can be sorted to obtain sorted edge data. In some examples, sorting can be individually performed based on unique identifiers of points and edges.

In the above-mentioned method, internal sorting can be performed on the generated node data subfile and edge data subfile, and then the sorted node data and the sorted edge data can be further obtained based on the internally ordered node data subfile and edge data subfile, thereby implementing efficient sorting in two phases and diversifying external sorting methods.

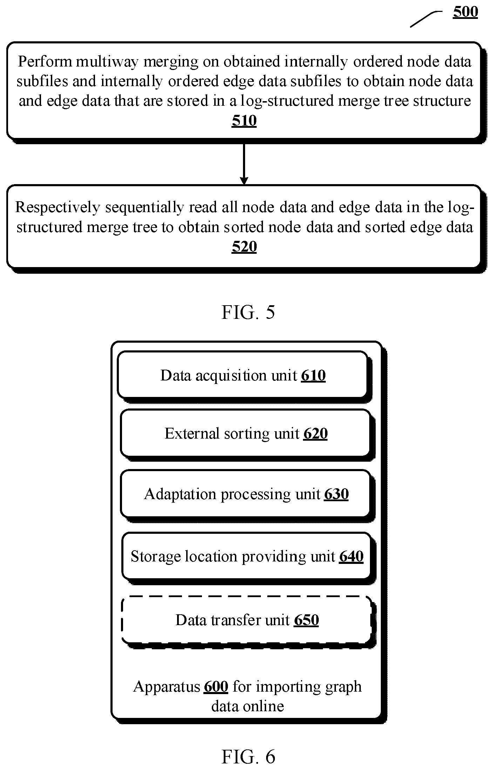

FIG. 5 is a flowchart illustrating an example of a process 500 of performing multiway merging on node data and edge data, according to some embodiments of this specification.

In step 510, multiway merging is performed on the obtained internally ordered node data subfiles and internally ordered edge data subfiles to obtain node data and edge data that are stored in a log-structured merge tree structure.

In the embodiments, multiway merging can be performed on the obtained internally ordered node data subfiles and edge data subfiles by using a log-structured merge tree (LSM tree) to obtain a plurality of sorted string tables (SSTable). Each sorted string table includes a plurality of ordered node data records or edge data records. The SSTable file is a persistent data file on a disk. Data in the SSTable file are usually arranged based on a sequence of specified keys. In some examples, the node data records in the sorted string table can be arranged based on a sequence of unique identifiers of nodes, and the edge data records in the sorted string table can be arranged based on a sequence of unique identifiers of edges. In some examples, SSTable files of different levels (for example, level 0, level 1, level 2, ..., and level n) can exist. SSTable files of different levels can include data in different time periods and/or results of different merging operations. In the LSM tree using multi-level SSTable files, an SSTable closer to the top (for example, level 0) is newer, and an SSTable closer to the bottom (for example, level n) is older.

In some examples, to perform multiway merging by using the log-structured merge tree, an ordered storage structure can be used in the memory to temporarily store newly written data (for example, a node data subfile or an edge data subfile). The ordered storage structure can be, for example, a sort tree (a red-black tree, a balanced binary tree, etc.), a skip list, or an ordered array. When data stored in the ordered storage structure in the memory reach a predetermined size, the data are written to a storage medium such as a disk or a flash memory, and a sorted string table (for example, a sorted string table including a node data record or a sorted string table including an edge data record) is formed. Therefore, at least some of the node data and the edge data can be persisted on the disk in a form of a sorted string table.

In step 520, all node data and edge data in the log-structured merge tree are respectively sequentially read to obtain sorted node data and sorted edge data.

In the embodiments, all the node data can be read based on a sequence in the log-structured merge tree to obtain the sorted node data. Similarly, all the edge data can be read based on a sequence in the log-structured merge tree to obtain the sorted edge data.

In the above-mentioned method, ordered storage of the node data and the edge data is implemented by constructing the log-structured merge tree, and the sorted node data and the sorted edge data are obtained based on a sequence of reading the log-structured merge tree, thereby implementing efficient external sorting of node data and edge data by using a data structure for high-performance data storage.

In some implementations, external sorting can be performed on the index data with reference to the above-mentioned method for performing external sorting on the node data and the edge data, to obtain sorted index data. As such, efficient sorting of the index data is implemented.

Referring back to FIG. 2, in step 230, the sorted graph data are packaged based on a second storage format specified in the target graph database, to obtain a graph data file to be imported and a corresponding metadata file.

In some examples, the sorted graph data can be packaged into the second storage format specified in the target graph database, to obtain the graph data file to be imported and the corresponding metadata file. In some examples, the second storage format can be a storage format of a target subgraph specified in the target database. In some examples, the storage format can be used to indicate a sequence of non-null attributes and null attributes. In some examples, the storage format can be used to indicate whether an incoming edge and an outgoing edge are stored together with point data. In some examples, the storage format can be further used to indicate a segmentation method for a value whose data volume exceeds a threshold, thereby reducing large performance degradation caused by an excessively large data volume of a node in the tree structure.

It can be understood that the corresponding metadata file can also be stored in the second storage format. Therefore, the graph data file to be imported and the corresponding metadata file that are obtained can be used as an underlying database file compatible with the target database.

In some examples, the graph data file to be imported and the corresponding metadata file that are obtained can be stored in an intermediate storage device. In these examples, the intermediate storage device and the graph database server are located in the same local area network. For example, the intermediate storage device can be the intermediate server 150 shown in FIG. 1. In these examples, the storage location information of the graph data file and the corresponding metadata file can indicate a storage location on the intermediate storage device. In some examples, the intermediate storage device can perform the above-mentioned step 210 to step 230. In these examples, the graph data file to be imported and the corresponding metadata file that are obtained can be directly stored locally. Therefore, the graph data file to be imported and the corresponding metadata file that are obtained are stored in a device located in the same local area network as the graph database, so as to implement high-speed data transmission and effectively reduce performance consumption in a data import process, so that the graph database server can efficiently import the graph data file to the target graph database.

In the embodiments, the graph database server can directly import the graph data file to be imported and the corresponding metadata file that are used as the underlying database file to the target database. In some examples, the graph data file to be imported and the corresponding metadata file can be imported to the target subgraph indicated by the subgraph identifier. In some examples, the target subgraph can be a new subgraph created by using the underlying database file. Correspondingly, the obtained metadata file can be determined as a metadata file corresponding to the target subgraph. In some examples, original data may exist in the target subgraph, and the original data can be replaced with the underlying database file. Correspondingly, a corresponding original metadata file can be replaced with the obtained metadata file. Therefore, full import of subgraph data is implemented.

Optionally, the underlying database file can be used to incrementally update the original data of the target subgraph. Correspondingly, the obtained metadata file can be used to correspondingly update the original metadata file corresponding to the target subgraph. Therefore, incremental import of subgraph data is implemented.

The methods for importing graph data online disclosed in FIG. 1 to FIG. 5 are used. In the methods for importing graph data online, graph data stored in a first storage format can be acquired from a data source; then external sorting can be performed on the graph data to obtain sorted graph data; the sorted graph data can be packaged based on a second storage format specified in a target graph database, to obtain a graph data file to be imported and a corresponding metadata file; and storage location information of the graph data file to be imported and the corresponding metadata file can be provided to a graph database server, so that the graph database server imports the graph data file to the target graph database, and updates a metadata file corresponding to the target graph database based on the obtained metadata file. As such, during data import, the ordering of an original data structure is maintained, and performance consumption during import is effectively reduced, so that graph data can be imported online with high performance. In addition, the entire data import process is split into two parts: a relatively independent external sorting stage and an overall data import stage. Resources of the graph database server need to be occupied only in the overall data import stage, and stage-by-stage execution also reduces the difficulty in monitoring and maintaining the data import process.

FIG. 6 is a block diagram illustrating an example of an apparatus 600 for importing graph data online, according to some embodiments of this specification. The apparatus embodiments can correspond to the method embodiments shown in FIG. 2 to FIG. 5, and the apparatus can be specifically used in various electronic devices.

As shown in FIG. 6, the apparatus 600 for importing graph data online can include a data acquisition unit 610, an external sorting unit 620, an adaptation processing unit 630, and a storage location providing unit 640.

The data acquisition unit 610 is configured to acquire graph data stored in a first storage format from a data source.

In an example, the graph data further includes index data.

The external sorting unit 620 is configured to perform external sorting on the graph data to obtain sorted graph data.

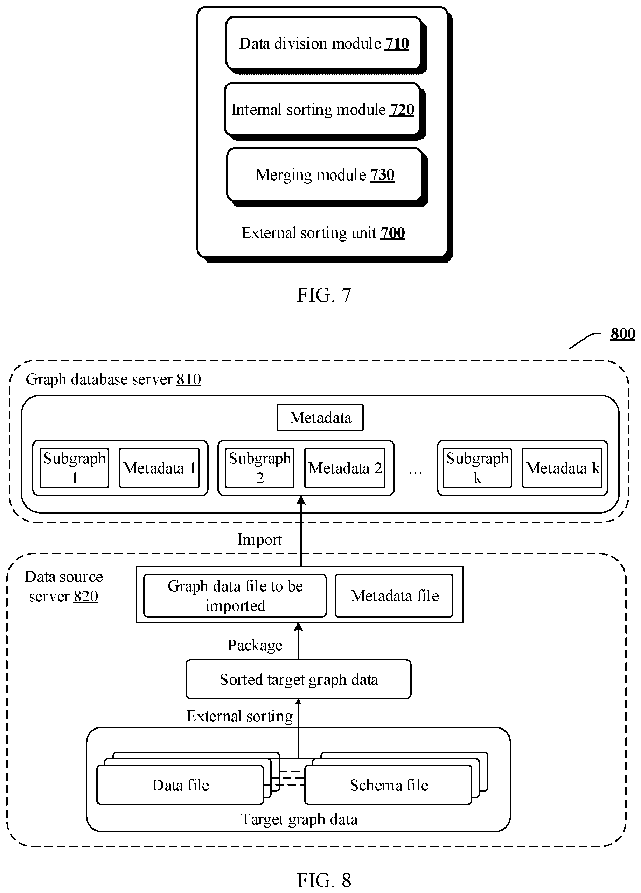

FIG. 7 is a block diagram illustrating an example of an external sorting unit 700 in an apparatus for importing graph data online, according to some embodiments of this specification.

As shown in FIG. 7, the external sorting unit 700 can include a data division module 710, an internal sorting module 720, and a merging module 730.

The data division module 710 is configured to divide the graph data based on a capacity of a memory, and generate a plurality of node data subfiles and edge data subfiles.

In an example, the data division module 710 is further configured to divide node data and edge data in the graph data into data blocks of a specified size based on the capacity of the memory; and package each piece of node data or edge data in the obtained data block into a corresponding data record, and generate a corresponding node data subfile or edge data subfile.

The internal sorting module 720 is configured to respectively sort data records in the obtained node data subfiles and edge data subfiles in the memory to obtain internally ordered node data subfiles and internally ordered edge data subfiles.

The merging module 730 is configured to respectively perform multiway merging on the obtained internally ordered node data subfiles and internally ordered edge data subfiles to obtain sorted node data and sorted edge data.

In an example, the merging module 730 is further configured to perform multiway merging on the obtained internally ordered node data subfiles and internally ordered edge data subfiles to obtain node data and edge data that are stored in a log-structured merge tree structure, where at least some of the node data and the edge data are persisted on a disk in a form of a sorted string table; and respectively sequentially read all node data and edge data in the log-structured merge tree to obtain the sorted node data and the sorted edge data.

Referring back to FIG. 6, the adaptation processing unit 630 is configured to package the sorted graph data based on a second storage format specified in a target graph database, to obtain a graph data file to be imported and a corresponding metadata file.

In an example, the target graph database includes a plurality of subgraphs that are isolated from each other. A metadata file corresponding to the target graph database is a metadata file corresponding to a newly created subgraph to which the graph data file is imported.

The storage location providing unit 640 is configured to provide storage location information of the graph data file to be imported and the corresponding metadata file to a graph database server, so that the graph database server imports the graph data file to the target graph database, and updates the metadata file corresponding to the target graph database based on the obtained metadata file.

In an example, the apparatus 600 for importing graph data online can further include a data transfer unit 650, configured to store the graph data file to be imported and the corresponding metadata file in an intermediate storage device. The intermediate storage device and the graph database server are located in the same local area network.

For operations of the data acquisition unit 610, the external sorting unit 620, the adaptation processing unit 630, the storage location providing unit 640, and the data transfer unit 650, references can be made to related operations described in FIG. 2 to FIG. 5.

FIG. 8 is a block diagram illustrating an example of a graph database system 800, according to some embodiments of this specification.

As shown in FIG. 8, the graph database system 800 can include a graph database server 810 and a data source server 820. In some cases, the graph database server 800 can store only one graph. In some cases, the graph database server 810 can store a plurality of subgraphs that are isolated from each other, for example, subgraph 1 and metadata 1, and subgraph 2 and metadata 2. Each subgraph and corresponding metadata are logically and physically isolated from other subgraphs and corresponding metadata. In some examples, common metadata can also exist between subgraphs. In these examples, data import modifies only a subgraph involved and metadata corresponding to the subgraph, but does not modify common metadata.

The graph database server 810 can send a data import instruction to the data source server 820 in response to receiving a graph data import request, where the graph data import request includes data source information, and the data source information includes storage location information corresponding to target graph data. For detailed descriptions of the graph data import request, references can be further made to related descriptions of 210 in the embodiments of FIG. 2. The data source server 820 can store, in a first storage format, graph data that needs to be imported. In some examples, the graph data can be individually stored in the form of a data file and a schema file. In response to receiving the data import instruction, the data source server 820 can acquire target graph data targeted by the data import instruction. Then the data source server 820 can perform external sorting on the target graph data to obtain sorted target graph data. Further, the data source server 820 can package the sorted target graph data based on a second storage format specified in a target graph database (for example, a graph database provided by the graph database server 810), to obtain a graph data file to be imported and a corresponding metadata file. Then the data source server 820 can provide location information of the graph data file and the corresponding metadata file that are obtained to the graph database server 810. Therefore, the graph database server 810 can import the graph data file to the target graph database, and update a metadata file corresponding to the target graph database based on the obtained metadata file. In some examples, the graph database server 810 can import the graph data file to a specified subgraph in the target graph database, and correspondingly update a metadata file corresponding to the specified subgraph.

It is worthwhile to note that for the above-mentioned specific operations, references can be made to corresponding descriptions in the above-mentioned embodiments of FIG. 2 to FIG. 5. Details are omitted here for simplicity.

Embodiments of the methods and apparatuses for importing graph data online and the graph database systems according to the embodiments of this specification are described above with reference to FIG. 1 to FIG. 8.

The apparatus for importing graph data online in the embodiments of the specification can be implemented by using hardware, or can be implemented by using software or a combination of hardware and software. Software implementation is used as an example. As a logical apparatus, the apparatus is formed by reading a corresponding computer program instruction in a storage to a memory by a processor of a device in which the apparatus is located. In the embodiments of this specification, the apparatus for importing graph data online can be implemented by using, for example, an electronic device.

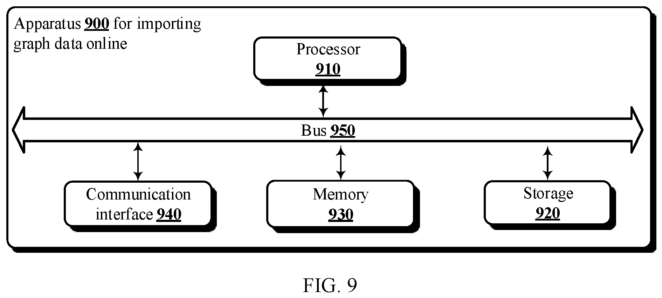

FIG. 9 is a schematic diagram illustrating an example of an apparatus 900 for importing graph data online, according to some embodiments of this specification.

As shown in FIG. 9, the apparatus 900 for importing graph data online can include at least one processor 910, a storage (for example, a nonvolatile memory) 920, a memory 930, and a communication interface 940, and the at least one processor 910, the storage 920, the memory 930, and the communication interface 940 are connected together through a bus 950. The at least one processor 910 executes at least one computer-readable instruction (that is, the above-mentioned element implemented in a software form) stored or encoded in the storage.

In some embodiments, the computer-executable instruction is stored in the storage. When the computer-executable instruction is executed, the at least one processor 910 is enabled to acquire graph data stored in a first storage format from a data source; perform external sorting on the graph data to obtain sorted graph data; package the sorted graph data based on a second storage format specified in a target graph database, to obtain a graph data file to be imported and a corresponding metadata file; and provide storage location information of the graph data file to be imported and the corresponding metadata file to a graph database server, so that the graph database server imports the graph data file to the target graph database, and updates a metadata file corresponding to the target graph database based on the obtained metadata file.

It should be understood that when the computer-executable instruction stored in the storage is executed, the at least one processor 910 is enabled to perform the operations and functions described above with reference to FIG. 1 to FIG. 5 in the embodiments of this specification.

According to some embodiments, a program product such as a computer-readable medium is provided. The computer-readable medium can have an instruction (that is, the above-mentioned element implemented in a software form). When the instruction is executed by a computer, the computer is enabled to perform the operations and functions described above with reference to FIG. 1 to FIG. 5 in the embodiments of this specification.

Specifically, a system or an apparatus equipped with a readable storage medium can be provided, and software program code for implementing the functions in any of the above-mentioned embodiments is stored in the readable storage medium, so that a computer or a processor of the system or the apparatus reads and executes the instruction stored in the readable storage medium.

In this case, the program code read from the readable medium can implement the functions in any one of the embodiments described above, and therefore the machine-readable code and the readable storage medium storing the machine-readable code form a part of this application.

Computer program code needed for operation of each part of this specification can be compiled in any one or more programming languages, including an object-oriented programming language such as Java, Scala, Smalltalk, Eiffel, JADE, Emerald, C++, C#, VB, NET, and Python, a conventional programming language such as C language, Visual Basic 2003, Perl, COBOL 2002, PHP, and ABAP, a dynamic programming language such as Python, Ruby, and Groovy, or another programming language. The program code can run on a user computer, or run as a stand-alone software package on the user computer, or partially run on the user computer and partially run on a remote computer, or completely run on the remote computer or a server. In the latter case, the remote computer can be connected to the user computer in any form of network, such as a local area network (LAN) or a wide area network (WAN), or connected to an external computer (for example, via the Internet), or in a cloud computing environment, or used as a service, such as software as a service (SaaS).

Embodiments of the readable storage medium include a floppy disk, a hard disk, a magneto-optical disk, an optical disc (such as a CD-ROM, a CD-R, a CD-RW, a DVD-ROM, a DVD-RAM, a DVD-RW, a DVD-RW), a magnetic tape, a non-volatile memory card, and a ROM. Alternatively, the program code can be downloaded from a server computer or a cloud by a communication network.

Specific embodiments of this specification are described above. Other embodiments fall within the scope of the appended claims. In some cases, the actions or steps described in the claims can be performed in an order different from those in the embodiments, and the desired results can still be achieved. In addition, processes described in the accompanying drawings do not necessarily need a specific order or a sequential order shown to achieve the desired results. In some implementations, multi-tasking and parallel processing are also possible or may be advantageous.

Not all steps and units in the above-mentioned procedures and system structure diagrams are necessary. Some steps or units can be ignored based on actual needs. An execution sequence of the steps is not fixed, and can be determined as needed. The apparatus structure described in the above-mentioned embodiments can be a physical structure, or can be a logical structure. In other words, some units can be implemented by the same physical entity, or some units can be implemented by a plurality of physical entities or implemented jointly by some components in a plurality of independent devices.

The term "example" used throughout this specification means "used as an example, an instance, or an illustration" and does not mean "preferred" or "advantageous" over other embodiments. Specific implementations include specific details for the purpose of providing an understanding of the described technologies. However, these technologies can be implemented without these specific details. In some instances, to avoid obscuring the described concepts in the embodiments, well-known structures and apparatuses are shown in the form of a block diagram.

Optional implementations of the embodiments of this specification are described above with reference to the accompanying drawings. However, the embodiments of this specification are not limited to specific details in the above-mentioned implementations. Within a technical concept scope of the embodiments of this specification, various simple variations of the technical solutions of the embodiments of this specification can be made, and these simple variations are all within the protection scope of the embodiments of this specification.

The above-mentioned descriptions of content in this specification are provided to enable any person of ordinary skill in the art to implement or use content in this specification. Various modifications to the content of this specification are clear to a person of ordinary skill in the art. In addition, the general principle defined in this specification can be applied to other variations without departing from the protection scope of the content of this specification. Therefore, the content in this specification is not limited to the examples and designs described here, but is consistent with the widest range of principles and novelty features that conform to this disclosure.

### EXAMPLES

1. A method for importing graph data online, comprising:
   acquiring graph data stored in a first storage format from a data source;
   performing external sorting on the graph data to obtain sorted graph data;
   packaging the sorted graph data based on a second storage format specified in a target graph database, to obtain a graph data file to be imported and a corresponding metadata file; and
   providing storage location information of the graph data file to be imported and the corresponding metadata file to a graph database server, so that the graph database server imports the graph data file to the target graph database, and updates a metadata file corresponding to the target graph database based on the obtained metadata file.
2. The method according to example 1, wherein before the providing storage location information of the graph data file and the corresponding metadata file to a graph database server, the method further comprises:
   storing the graph data file to be imported and the corresponding metadata file in an intermediate storage device, wherein the intermediate storage device and the graph database server are located in a same local area network.
3. The method according to example 1, wherein the performing external sorting on the graph data to obtain sorted graph data comprises:
   dividing the graph data based on a capacity of a memory, and generating a plurality of node data subfiles and edge data subfiles;
   respectively sorting data records in the obtained node data subfiles and edge data subfiles in the memory to obtain internally ordered node data subfiles and internally ordered edge data subfiles; and
   respectively performing multiway merging on the obtained internally ordered node data subfiles and internally ordered edge data subfiles to obtain sorted node data and sorted edge data.
4. The method according to example 3, wherein the dividing the graph data based on a capacity of a memory, and generating a plurality of node data subfiles and edge data subfiles comprises:
   dividing node data and edge data in the graph data into data blocks of a specified size based on the capacity of the memory; and
   packaging each piece of node data or edge data in the obtained data block into a corresponding data record, and generating a corresponding node data subfile or edge data subfile.
5. The method according to example 3, wherein the respectively performing multiway merging on the obtained internally ordered node data subfiles and internally ordered edge data subfiles to obtain sorted node data and sorted edge data comprises:
   performing multiway merging on the obtained internally ordered node data subfiles and internally ordered edge data subfiles to obtain node data and edge data that are stored in a log-structured merge tree structure, wherein at least some of the node data and the edge data are persisted on a disk in a form of a sorted string table; and
   respectively sequentially reading all node data and edge data in the log-structured merge tree to obtain the sorted node data and the sorted edge data.
6. The method according to any one of examples 1 to 5, wherein the target graph database comprises a plurality of subgraphs that are isolated from each other, the metadata file corresponding to the target graph database is a metadata file corresponding to a newly created subgraph to which the graph data file is imported, and the graph data further comprises index data.
7. An apparatus for importing graph data online, comprising:
   a data acquisition unit, configured to acquire graph data stored in a first storage format from a data source;
   an external sorting unit, configured to perform external sorting on the graph data to obtain sorted graph data;
   an adaptation processing unit, configured to package the sorted graph data based on a second storage format specified in a target graph database, to obtain a graph data file to be imported and a corresponding metadata file; and
   a storage location providing unit, configured to provide storage location information of the graph data file to be imported and the corresponding metadata file to a graph database server, so that the graph database server imports the graph data file to the target graph database, and updates a metadata file corresponding to the target graph database based on the obtained metadata file.
8. The apparatus according to example 7, wherein the apparatus further comprises:
   a data transfer unit, configured to store the graph data file to be imported and the corresponding metadata file in an intermediate storage device, wherein the intermediate storage device and the graph database server are located in a same local area network.
9. The apparatus according to example 7, wherein the external sorting unit comprises:
   a data division module, configured to divide the graph data based on a capacity of a memory, and generate a plurality of node data subfiles and edge data subfiles;
   an internal sorting module, configured to respectively sort data records in the obtained node data subfiles and edge data subfiles in the memory to obtain internally ordered node data subfiles and internally ordered edge data subfiles; and
   a merging module, configured to respectively perform multiway merging on the obtained internally ordered node data subfiles and internally ordered edge data subfiles to obtain sorted node data and sorted edge data.
10. The apparatus according to example 9, wherein the data division module is further configured to:
   divide node data and edge data in the graph data into data blocks of a specified size based on the capacity of the memory; and
   package each piece of node data or edge data in the obtained data block into a corresponding data record, and generate a corresponding node data subfile or edge data subfile.
11. The apparatus according to example 9, wherein the merging module is further configured to:
   perform multiway merging on the obtained internally ordered node data subfiles and internally ordered edge data subfiles to obtain node data and edge data that are stored in a log-structured merge tree structure, wherein at least some of the node data and the edge data are persisted on a disk in a form of a sorted string table; and
   respectively sequentially read all node data and edge data in the log-structured merge tree to obtain the sorted node data and the sorted edge data.
12. The apparatus according to any one of examples 7 to 11, wherein the target graph database comprises a plurality of subgraphs that are isolated from each other, the metadata file corresponding to the target graph database is a metadata file corresponding to a newly created subgraph to which the graph data file is imported, and the graph data further comprises index data.
13. A graph database system, comprising:
   a graph database server, configured to send a data import instruction to a data source server in response to receiving a graph data import request, wherein the graph data import request comprises data source information, and the data source information comprises storage location information corresponding to target graph data; and
   the data source server, configured to store, in a first storage format, graph data that needs to be imported; acquire the target graph data targeted by the data import instruction in response to receiving the data import instruction; perform external sorting on the target graph data to obtain sorted target graph data; package the sorted target graph data based on a second storage format specified in a target graph database, to obtain a graph data file to be imported and a corresponding metadata file; and provide storage location information of the graph data file to be imported and the corresponding metadata file to the graph database server, so that the graph database server imports the graph data file to the target graph database, and updates a metadata file corresponding to the target graph database based on the obtained metadata file.
14. An apparatus for importing graph data online, comprising at least one processor, a storage coupled to the at least one processor, and a computer program stored in the storage, wherein the at least one processor executes the computer program to implement the method for importing graph data online according to any one of examples 1 to 6.

## Claims

1. A method for importing graph data online, comprising:
acquiring graph data stored in a first storage format from a data source;
performing external sorting on the graph data to obtain sorted graph data;
packaging the sorted graph data based on a second storage format specified in a target graph database, to obtain a graph data file to be imported and a corresponding metadata file; and
providing storage location information of the graph data file to be imported and the corresponding metadata file to a graph database server, so that the graph database server imports the graph data file to the target graph database, and updates a metadata file corresponding to the target graph database based on the obtained metadata file.

2. The method according to claim 1, wherein before providing storage location information of the graph data file and the corresponding metadata file to a graph database server, the method further comprises:
storing the graph data file to be imported and the corresponding metadata file in an intermediate storage device, wherein the intermediate storage device and the graph database server are located in a same local area network.

3. The method according to any one of claims 1 or 2, wherein performing external sorting on the graph data to obtain sorted graph data comprises:
dividing the graph data based on a capacity of a memory, and generating a plurality of node data subfiles and edge data subfiles;
respectively sorting data records in the obtained node data subfiles and edge data subfiles in the memory to obtain internally ordered node data subfiles and internally ordered edge data subfiles; and
respectively performing multiway merging on the obtained internally ordered node data subfiles and internally ordered edge data subfiles to obtain sorted node data and sorted edge data.

4. The method according to claim 3, wherein dividing the graph data based on a capacity of a memory, and generating a plurality of node data subfiles and edge data subfiles comprises:
dividing node data and edge data in the graph data into data blocks of a specified size based on the capacity of the memory; and
packaging each piece of node data or edge data in the obtained data block into a corresponding data record, and generating a corresponding node data subfile or edge data subfile.

5. The method according to any one of claims 3 or 4, wherein respectively performing multiway merging on the obtained internally ordered node data subfiles and internally ordered edge data subfiles to obtain sorted node data and sorted edge data comprises:
performing multiway merging on the obtained internally ordered node data subfiles and internally ordered edge data subfiles to obtain node data and edge data that are stored in a log-structured merge tree structure, wherein at least some of the node data and the edge data are persisted on a disk in a form of a sorted string table; and
respectively sequentially reading all node data and edge data in the log-structured merge tree to obtain the sorted node data and the sorted edge data.

6. The method according to any one of claims 1 to 5, wherein the target graph database comprises a plurality of subgraphs that are isolated from each other, the metadata file corresponding to the target graph database is a metadata file corresponding to a newly created subgraph to which the graph data file is imported, and the graph data further comprises index data.

7. An apparatus for importing graph data online, comprising:
a data acquisition unit, configured to acquire graph data stored in a first storage format from a data source;
an external sorting unit, configured to perform external sorting on the graph data to obtain sorted graph data;
an adaptation processing unit, configured to package the sorted graph data based on a second storage format specified in a target graph database, to obtain a graph data file to be imported and a corresponding metadata file; and
a storage location providing unit, configured to provide storage location information of the graph data file to be imported and the corresponding metadata file to a graph database server, so that the graph database server imports the graph data file to the target graph database, and updates a metadata file corresponding to the target graph database based on the obtained metadata file.

8. The apparatus according to claim 7, wherein the apparatus further comprises:
a data transfer unit, configured to store the graph data file to be imported and the corresponding metadata file in an intermediate storage device, wherein the intermediate storage device and the graph database server are located in a same local area network.

9. The apparatus according to any one of claims 7 or 8, wherein the external sorting unit comprises:
a data division module, configured to divide the graph data based on a capacity of a memory, and generate a plurality of node data subfiles and edge data subfiles;
an internal sorting module, configured to respectively sort data records in the obtained node data subfiles and edge data subfiles in the memory to obtain internally ordered node data subfiles and internally ordered edge data subfiles; and
a merging module, configured to respectively perform multiway merging on the obtained internally ordered node data subfiles and internally ordered edge data subfiles to obtain sorted node data and sorted edge data.

10. The apparatus according to claim 9, wherein the data division module is further configured to:
divide node data and edge data in the graph data into data blocks of a specified size based on the capacity of the memory; and
package each piece of node data or edge data in the obtained data block into a corresponding data record, and generate a corresponding node data subfile or edge data subfile.

11. The apparatus according to any one of claims 9 or 10, wherein the merging module is further configured to:
perform multiway merging on the obtained internally ordered node data subfiles and internally ordered edge data subfiles to obtain node data and edge data that are stored in a log-structured merge tree structure, wherein at least some of the node data and the edge data are persisted on a disk in a form of a sorted string table; and
respectively sequentially read all node data and edge data in the log-structured merge tree to obtain the sorted node data and the sorted edge data.

12. The apparatus according to any one of claims 7 to 11, wherein the target graph database comprises a plurality of subgraphs that are isolated from each other, the metadata file corresponding to the target graph database is a metadata file corresponding to a newly created subgraph to which the graph data file is imported, and the graph data further comprises index data.

13. A graph database system, comprising:
a graph database server, configured to send a data import instruction to a data source server in response to receiving a graph data import request, wherein the graph data import request comprises data source information, and the data source information comprises storage location information corresponding to target graph data; and
the data source server, configured to store, in a first storage format, graph data that needs to be imported; acquire the target graph data targeted by the data import instruction in response to receiving the data import instruction; perform external sorting on the target graph data to obtain sorted target graph data; package the sorted target graph data based on a second storage format specified in a target graph database, to obtain a graph data file to be imported and a corresponding metadata file; and provide storage location information of the graph data file to be imported and the corresponding metadata file to the graph database server, so that the graph database server imports the graph data file to the target graph database, and updates a metadata file corresponding to the target graph database based on the obtained metadata file.

14. An apparatus for importing graph data online, comprising at least one processor, a storage coupled to the at least one processor, and a computer program stored in the storage, wherein the at least one processor executes the computer program to implement the method for importing graph data online according to any one of claims 1 to 6.
